# EUROPEAN PATENT APPLICATION

(11) **EP 1 944 117 A1**
(43) Date of publication of application: **16.07.2008**
(21) Application number: 08100245.3
(22) Date of filing: 09.01.2008
(51) Int. Cl.: B23K 26/32, B23K 26/12, B23K 26/14, B23P 6/04, F01D 5/00, B23K 101/00

(54) **High temperature laser welding**

(30) Priority: 10.01.2007 US 651590
(71) Applicant: General Electric Company, Schenectady, NY 12345 (US)
(72) Inventor: Nowak, Daniel, Greenville, SC 29607 (US); Arnett, Michael Douglas, Simpsonville, SC 29681 (US); Kottilingam, Srikanth C., Simpsonville, SC 29681 (US); Mukira, Charles G., Simpsonville, SC 29680 (US)
(74) Representative: Illingworth-Law, William Illingworth

(57) **Abstract**

A method of welding superalloy components comprising: pre-heat one or more components to be welded to a temperature of at least 816° C in a substantially enclosed inert gas atmosphere; supplying multiple fillers (20,24 or 26) to the weld zone, at least two of said fillers having different compositions; and welding the one or more preheated components utilizing a laser beam, while maintaining said pre-heat temperature.

## Description

This invention relates to gas turbine technology generally, and specifically, to a laser beam welding process for joining or repairing gas turbine components.

### BACKGROUND OF THE INVENTION

Laser beam welding is increasingly used to join or repair gas turbine components, particularly buckets and nozzles. These components are frequently made from very high strength nickel or cobalt superalloys that are difficult to weld using traditional methods. Often, ductile fillers or shims are used to reduce the cracking propensity in the weld fusion zone and heat-affected zone, but this reduces the mechanical capability of the weld relative to the base material.

In the fabrication and repair of gas turbine buckets using gas tungsten arc welding (GTAW), very high temperature pre-heats have been in use for some time. Current methods involve preheating a bucket tip by radiant or induction heating to temperatures in excess of 1500°F. This enables the use of high strength fillers to produce welds with mechanical properties comparable to the base material of the bucket.

A method of laser welding using induction preheating and powder-fed filler material is disclosed in U.S. Patent No. 6,054,672.

Another method for preheating laser beam welds involves running the laser beam over the part at low power to locally increase the temperature of the part. Temperature is less controllable using this method, as it will vary greatly from one part to the next due to variation in the parts. Also, the separate preheating cannot be maintained during welding, since the same beam is used for welding as is used for preheat. Finally, since the beam is only applied to a single moving spot and since the part is losing heat rapidly to conduction and radiation, the maximum temperature that can be achieved is comparatively low.

### BRIEF DESCRIPTION OF THE INVENTION

In an exemplary embodiment described herein, a process is provided for laser beam welding a superalloy component where the weld region is locally preheated in situ using induction coils, radiant (quartz lamp) or conductive (resistance) heaters. The temperature achieved during pre-heat and during welding is greater than 1500°F and may be greater than 2000°F. The elevated temperature effectively eliminates the risk of crack in the weld or heat-affected zone of the base metal, and can also enable the welding of highly alloyed base metals using matching strength filler metals. Filler metal is supplied to the weld by powder feed, wire feed, preplaced shims inserted between the components to be joined, or any combination thereof. The use of multiple filler materials allows for the creation of unique chemistries in the fusion zone, potentially creating joints with metallurgical capabilities tailored to meet the needs of the component. Plural filler materials of different composition may be supplied to the weld zone by the same or different supply methods (i.e., by shims, wire feed or powder). Alternatively, fillers of the same composition may be supplied by different methods.

Accordingly, in one aspect, the present invention relates to a method of welding superalloy components comprising: preheating one or more components to be welded to a pre-heat temperature of at least 1500°F in a substantially enclosed inert gas atmosphere; supplying multiple fillers to the weld zone, at least two of said fillers having different compositions; and welding the one or more preheated components utilizing a laser beam, while maintaining said pre-heat temperature.

In another aspect, the invention relates to a method of welding superalloy turbine components comprising: preheating the one or more components to be welded to a pre-heat temperature of at least 1500°F in a substantially enclosed inert gas atmosphere; supplying multiple fillers of identical composition to the weld zone utilizing at least two different filler supply methods; and welding the one or more preheated components utilizing a laser beam, while maintaining the pre-heat temperature.

Embodiments of the invention will now be described in detail by way of example only in connection with the drawings identified below.

### BRIEF DESCRIPTION OF THE DRAWINGS

FIGURE 1 is a schematic illustration of a laser welding system in accordance with an exemplary embodiment; and

FIGURE 2 is a schematic illustration of different methods of supplying filler material to the weld zone in accordance with the exemplary embodiment.

### DETAILED DESCRIPTION OF THE INVENTION

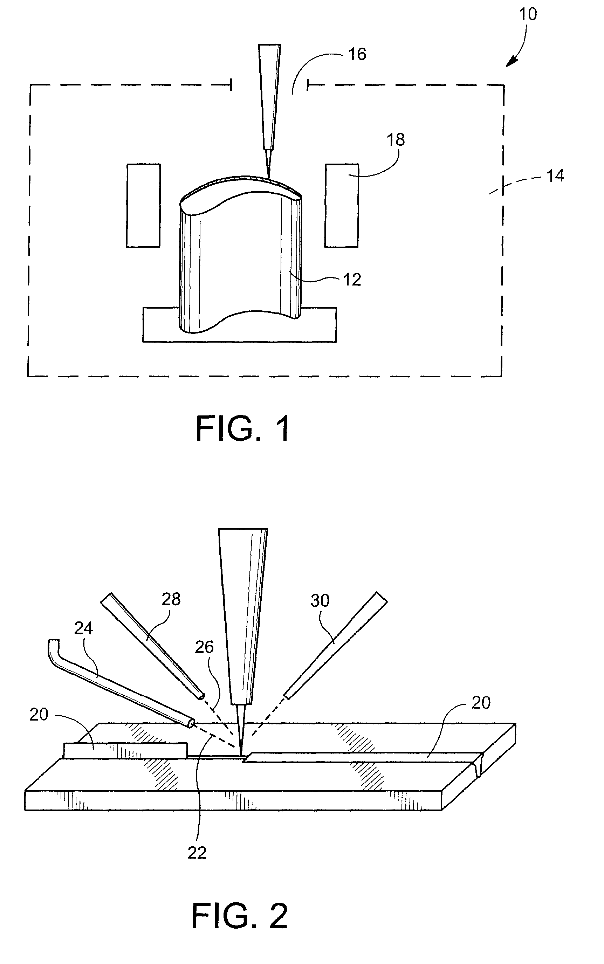

With reference to Figure 1, a laser welding system 10 utilizes a pre-heat system constructed so as to completely enclose a workpiece such as a turbine bucket 12 within an enclosure 14 (shown in phantom) with an opening or window 16 that exposes the region to be welded. An inert gas such as Argon, is fed into the enclosure 14 at a high enough rate to ensure that no air can enter through the welding window 16. In the exemplary embodiment, the temperature of the part 12 to be welded is elevated to over 1500°F and in some instances over 2000°F (depending on specific applications, alloys, etc.) using induction heating, quartz lamps, or resistance heating coils to heat the part. These alternative heating elements are indicated generically by reference numeral 18 in Figure 1.

The filler material is supplied to the weld zone or joint by any one of, or any combination of, the filler supply methods illustrated in Figure 2. Specifically, filler material may be supplied by preplacing one or more shims 20 in weld joint; by feeding a wire 22 via supply tube 24 to the weld puddle; or by supplying powder 26 by one or more tubes 28, 30 to the weld puddle. Once the welding process is completed, the inert gas shield is maintained while the welded part or parts is allowed to cool.

It will be appreciated that once the part to be welded reaches the pre-heat target temperature, it is held at that temperature through the entire welding process. The elevated temperature enables welding a very highly alloyed based metals using matching strength and matching chemistry filler metals. Use of the enclosed preheat system with an inert gas atmosphere protects the part against oxidation of the base metal due to the high preheat temperature.

It will also be appreciated that the fillers used in the laser welding process may be known high strength fillers in order to match the capability of the base metal to the maximum extent possible. On the other hand, the use of different filler material during the same welding operation may be advantageous. For example, when welding a tip cap onto a turbine bucket, a preplaced shim may be employed between the two parts to be welded while a powder filler material, of the same or different composition, is supplied over the weld joint to create a gradient structure. Thus, different composition fillers may be supplied to the weld zone by utilizing the same or different filler supply methods described above to create desired chemistries between the parts to be welded. At the same time, identical filler material compositions may be supplied utilizing the same or one or more different filler supply methods.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of welding components comprising:
preheating one or more components (12) to be welded to a pre-heat temperature of at least 1500°F in a substantially enclosed inert gas atmosphere;
supplying multiple fillers (20, 22 or 26) to the weld zone, at least two of said fillers having different compositions; and
welding the one or more preheated components utilizing a laser beam, while maintaining said pre-heat temperature.

2. The method of claim 1, wherein said multiple fillers include powder fillers (26).

3. The method of claim 1, wherein said multiple fillers include wire fillers (22).

4. The method of claim 1, wherein said multiple fillers include one or more preplaced shims (20).

5. The method of claim 1, wherein one of said fillers (26) is supplied in powder form and another of said fillers (22) is supplied in wire form.

6. The method of claim 1, wherein one of said fillers is supplied in the form of at least one preplaced shim (20).

7. The method of claim 1, wherein one of said filler is supplied in powder form (26) and another of said fillers is supplied in the form of at least one preplaced shim (20).

8. The method of claim 1, wherein one of said fillers is supplied in wire form (22) and another of said fillers is supplied in the form of at least one preplaced shim (20).

9. The method of any one of the preceding claims, wherein said components to be welded comprise superalloys.

10. A method of welding superalloy turbine components comprising:
preheating the one or more components (20) to be welded to a pre-heat temperature of at least 1500°F in a substantially enclosed inert gas atmosphere;
supplying multiple fillers (20, 22 or 26) of identical composition to the weld zone utilizing at least two different filler supply methods; and
welding the one or more preheated components utilizing a laser beam, while maintaining said pre-heat temperature.
